# EUROPEAN PATENT APPLICATION

(11) **EP 1 065 168 A1**
(43) Date of publication of application: **03.01.2001**
(21) Application number: 00305495.4
(22) Date of filing: 29.06.2000
(51) Int. Cl.: C01C 1/02

(54) **Ammonia purification method**

(30) Priority: 29.06.1999 US 342451
(71) Applicant: THE BOC GROUP, INC., Murray Hill, New Providence, New Jersey 07974-2082 (US)
(72) Inventor: Ji, Wenchang, Doylestown, Pennsylvania 18901 (US); Athalye, Atul Mukund, Scotch Plains, New Jersey 07076 (US); Shirley, Arthur Irving, Piscataway, New Jersey (US); Sadkowski, Piotr, Bridgwater, New Jersey 08807 (US)
(74) Representative: Bousfield, Roger James

(57) **Abstract**

A method of purifying ammonia comprising introducing an ammonia stream into a membrane permeable to ammonia to produce a permeate stream comprising purified ammonia and a retentate stream comprising impurities from the ammonia stream; wherein the ammonia stream is introduced into the membrane at a temperature within a range of between about minus 30°C, and about 10°C. and at a pressure selected such that said ammonia at the temperature will not liquefy.

## Description

This invention relates to a method of purifying ammonia in which an ammonia stream is introduced into one or more membranes to produce a permeate stream comprising purified ammonia and a retentate stream comprising the impurities within the ammonia stream. More particularly, the invention relates to such a method in which the ammonia stream is introduced into the membrane at sub-ambient temperatures.

A variety of membranes have been provided that can be used to purify gas streams. In this regard, one or more membranes are positioned within a module to receive a feed stream. Depending on the type of membrane, components contained within the feed stream will permeate through the membrane to form a permeate stream while other components will be less permeable to form a retentate stream. The permeability of a component, or its ability to permeate through the membrane, can be defined as a product of membrane thickness and a rate of permeation per unit area of membrane per unit of driving force. Such permeability can either be dominated by the solubility of the component in the membrane or its diffusivity. The rate of diffusion relates to the fact that smaller molecules will travel faster through the membrane than larger molecules.

Membranes also have the property of selectivity. Selectivity can be defined as the ratio of permeability of one component to the permeability of another component. Permeability is known to depend on the material, the pressure, the temperature and the gas composition. Selectivity is also dependent upon the material and operating conditions such as temperature, pressure and gas composition. Typically, membranes cannot be operated so that they exhibit both high selectivity and permeability at the same time.

However, it has been found that in case of ammonia purification membranes can be selected and operated under temperature conditions that will optimise selectivity and permeability with the end result that the production of purified ammonia can be increased over existing production rates.

In accordance with the invention, there is provided a method of purifying ammonia comprising introducing an ammonia stream into a membrane permeable to ammonia to produce a permeate stream comprising purified ammonia and a retentate stream comprising impurities from the ammonia stream; wherein the ammonia stream is introduced into the membrane at a temperature within a range of between about minus 30°C, and about 10°C. and at a pressure selected such that said ammonia at the temperature will not liquefy

The selected pressure is typically less than about 1.18 atmospheres absolute at minus 30°C and less than about 6.075 atmospheres at about 10°C.

It has been found that it is not simply that the separation efficiency or permeation flux and product purity of ammonia increases at lower temperatures. At temperatures below where the ammonia will tend to liquefy, once liquid droplets appear on the membrane, the separation efficiency decreases. On the other hand when a membrane is operated within the temperature range and pressures (given above), the rate of production of ammonia and ammonia purity increase with decreasing temperature. Preferably the temperature is in a range of about 0°C and about 5°C and the ammonia stream is cooled prior to its introduction into the membrane. The membrane can be fabricated , for example, from NAFION (Trade Mark) polymer which may be obtained from E.I. Dupont of Wilmington, Delaware. This polymer is a copolymer of tetrafluoroethylene and perfluoro 3,6-dioxa-4-methyl-7-octene-sulphonic acid. Other possible materials include EPDM (ethene-propene terpolymer) and polychloroprene.

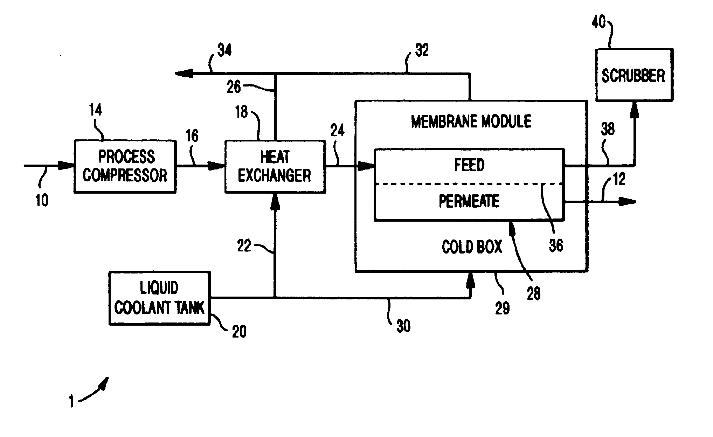

For a better understanding of the invention, reference will now be made, by way of exemplification only, to the accompanying drawing being a schematic representation of an apparatus used in carrying out a method of the invention.

With reference to the drawing, an apparatus 1 is illustrated which is designed to purify a contaminated ammonia feed stream 10 to produce an ammonia product stream 12. The contaminated ammonia feed stream 10 contains approximately 100 parts per million (ppm) of impurities in the feed. Such impurities include nitrogen, oxygen, hydrogen, carbon monoxide, carbon dioxide, hydrocarbons, organics and metal contaminants. The ammonia product stream 12 contains less than about 10 ppm of such impurities.

Preferably, the contaminated ammonia product stream 10 is compressed within a process compressor 14 or other means to raise the feed pressure to a pressure that is calculated to prevent the ammonia from liquefying at the temperature at which the process will be conducted. The process may be conducted at temperatures ranging from between about minus 30°C and about 10°C. At minus 30°C, the pressure should be less than about 1.18 atmospheres absolute. At 10°C the pressure should be less than about 6.075 atmospheres absolute. A compressed feed stream 16 is then cooled within a heat exchanger 18 which may be, for example, a commercially available two pass, plate-fin device in which a liquid coolant, such as obtained from a liquid coolant tank 20, is fed as a coolant stream 22 through a heat exchanger 18. This produces a cooled feed stream 24 and a warmed coolant stream 26. The cooled feed stream 24 is fed to a membrane of a membrane module 28 which is housed within a cold box 29 filled with insulating materials. Another coolant stream 30 is provided to cool the membrane module 28 and forms another warmed coolant stream 32 which can be combined with warmed coolant stream 26 and then vented through a vent 34.

Although a single membrane module 28 is shown there could be a series of such modules ie one or more membranes may be employed of the same or different types. The ammonia permeates through the membrane or membranes to form a permeate stream which is removed as the ammonia product stream 12. The retentate stream is removed as a waste stream 38 which may be introduced into a scrubber 40 of the type utilising a hydrochloric acid solution.

Tests were carried out to investigate the potential performance enhancements of the invention. For a pressure across a membrane (fabricated from a NAFION (Trade Mark) polymer) at about 0.5 atmospheres, the ammonia permeability was found to increase from about 16778 bar(a) to about 45015 bar(a) as the operating temperature was reduced from about 23°C. to about 4°C. The permeability enhancement increases with increasing driving force (or feed pressure for a given downstream pressure).

Further tests were conducted to determine the permeation of impurities. These results are summarised in the following table.

Effect of Feed Temperature on Membrane Separation Efficiency

| T (°C) | 23 | | 2 | |
|---|---|---|---|---|
| Gas | Feed | Permeate | Feed | Permeate |
| Impurity | (ppm) | (ppm) | (ppm) | (ppm) |
| H₂ | 81.85 | 2.10 | 79.90 | 0.94 |
| N₂ | 80.33 | 0.44 | 86.12 | 0.49 |
| O₂ | 87.18 | 0.86 | 90.17 | 0.77 |
| CO | 74.71 | 0.32 | 73.46 | 0.25 |
| CH₄ | 82.36 | 0.50 | 80.32 | 0.33 |
| Ammonia Recovery (%) | | 97.04 | | 98.29 |

As can be seen from this table, the percent recovery of the ammonia and ammonia purity increase with decreasing temperature.

## Claims

1. A method of purifying ammonia comprising introducing an ammonia stream into a membrane permeable to ammonia to produce a permeate stream comprising purified ammonia and a retentate stream comprising impurities from the ammonia stream; wherein the ammonia stream is introduced into the membrane at a temperature within a range of between about minus 30°C, and about 10°C. and at a pressure selected such that said ammonia at the temperature will not liquefy.

2. A method according to Claim 1 in which the pressure is less than about 1.18 atmospheres absolute at minus 30°C and less than about 6.075 atmospheres at 10°C.

3. A method according to Claim 1 or Claim 2 in which the temperature is between about 0°C and about 5°C.

4. A method according to any preceding claim in which the membrane is fabricated from a copolymer of tetrafluoroethylene and perfluoro 3,6-dioxa-4-methyl-7-octene-sulphonic acid.

5. A method according to any preceding claim in which the ammonia stream is cooled prior to its introduction into the membrane.
